# EUROPEAN PATENT APPLICATION

(11) **EP 4 375 337 A1**
(43) Date of publication of application: **29.05.2024**
(21) Application number: 22876243.1
(22) Date of filing: 27.09.2022
(51) Int. Cl.: C09C 1/48, C09D 17/00, H01M 4/02, H01M 4/13, H01M 4/62

(54) **CARBON BLACK, COMPOSITION, LAMINATE, AND BATTERY**

(30) Priority: 30.09.2021 JP 2021161767
(71) Applicant: Denka Company Limited, Tokyo 103-8338 (JP)
(72) Inventor: NAKASHIMA Michiya, Tokyo 103-8338 (JP); NAGAI Tatsuya, Tokyo 103-8338 (JP); HARADA Yusaku, Tokyo 103-8338 (JP); YAMADA Masato, Tokyo 103-8338 (JP); TANAKA Kosuke, Tokyo 103-8338 (JP)
(74) Representative: Mewburn Ellis LLP
(86) International application number: PCT/JP2022/035977
(87) International publication number: WO 2023/054377

(57) **Abstract**

A carbon black having a bulk density of 0.08 g/cm³ or lower after being compressed at 490 Pa for 3 minutes. A carbon black having a bulk density of 0.1 g/cm³ or lower after being stirred under a condition of gravity acceleration 400 G for 30 minutes using a rotation-revolution type stirrer.

## Description

### Technical Field

The present invention relates to a carbon black, a composition, a laminate, and a battery.

### Background Art

Due to increasing environmental and energy issues, techniques for realizing a low-carbon society that reduces dependence on fossil fuels have been actively developed. Examples of such technical development include development of low-pollution vehicles such as hybrid electric vehicles and electric vehicles, development of natural energy power generation / storage systems such as solar power generation and wind power generation, and development of next-generation power transmission networks that efficiently supply power and reduce power transmission loss.

One of key devices commonly required in these technologies is a battery, and such a battery is required to have a high output characteristic for enabling stable power supply regardless of a use environment temperature. Therefore, replacement of conventional lead-acid batteries, nickel-cadmium batteries, and nickel-hydrogen batteries with secondary batteries having higher energy density, output characteristics, and cycle characteristics is rapidly progressing. In particular, lithium ion secondary batteries are the most promising technology from the viewpoint of high energy density and output characteristics.

In such a battery, carbon black is generally used as a conductive material. The carbon black is required to exhibit high electron conductivity in order to improve battery characteristics (for example, discharge rate characteristics), and is also required to exhibit high ion conductivity by sufficiently retaining an electrolytic solution containing ions for charge and discharge (lithium ions in the case of a lithium ion secondary battery) in the entire active material.

In response to this, Patent Literature 1 discloses a carbon black material having a specific cOAN/OAN ratio and BET SSA. In addition, Patent Literature 2 discloses an acetylene black having a specific BET specific surface area, DBP absorption, and pH.

### Citation List

### Patent Literature

[Patent Literature 1] Japanese Patent Application Publication No. 2018-522977
[Patent Literature 2] Japanese Patent Application Publication No. 2009-35598

### Summary of Invention

### Technical Problem

An object of one aspect of the present invention is to provide a carbon black capable of enhancing discharge rate characteristics of a battery (particularly, a lithium ion secondary battery). An object of another aspect of the present invention is to provide a composition, a laminate, and a battery using the carbon black.

### Solution to Problem

As a result of intensive studies to solve the above-described problems, the present inventors have found that the carbon black that does not exceed a certain bulk density (is not easily compressed) even when pressure (gravity) is forcibly applied can enhance discharge rate characteristics, which is one of indicators of battery characteristics.

The present invention includes the following aspects.
[1] A carbon black having a bulk density of 0.08 g/cm³ or lower after being compressed at 490 Pa for 3 minutes.
[2] A carbon black having a bulk density of 0.1 g/cm³ or lower after being stirred under a condition of gravity acceleration 400 G for 30 minutes using a rotation-revolution type stirrer.
[3] The carbon black according to [1] or [2], having a specific surface area of 75 m²/g or more and 400 m²/g or less.
[4] A composition containing the carbon black according to any of [1] to [3], and a dispersion medium.
[5] The composition according to [4], further comprising a binder and an active material.
[6] The composition according to [4] or [5], being used for forming a battery member.
[7] A laminate comprising: a current collector; and a mixed material layer provided on the current collector and containing the carbon black according to any of [1] or [3].
[8] A battery containing the laminate according to [7] as an electrode.

### Advantageous Effects of Invention

According to one aspect of the present invention, it is possible to provide a carbon black capable of enhancing discharge rate characteristics of a battery (particularly, a lithium ion secondary battery).

According to another aspect of the present invention, it is possible to provide a composition capable of enhancing discharge rate characteristics of a battery (particularly, a lithium ion secondary battery).

According to another aspect of the present invention, it is possible to provide a laminate capable of enhancing discharge rate characteristics of a battery (in particular, a lithium ion secondary battery).

According to another aspect of the present invention, a battery having excellent discharge rate characteristics can be provided.

### Brief Description of Drawings

[FIG. 1] FIG. 1 is a schematic cross-sectional view showing an embodiment of a cylindrical cracking furnace.
[FIG. 2] FIG. 2 is a schematic view showing an embodiment of a battery.
[FIG. 3] FIG. 3 is an exploded perspective view showing an electrode group of the battery shown in FIG. 2.

### Description of Embodiments

Hereinafter, embodiments of the present invention will be described in detail. Note that the present invention is not limited to the embodiments described below. In the present specification, unless otherwise specified, a numerical range indicated using "to" means a range of the numerical value on the left side "or more " and the numerical value on the right side "or less". For example, "A to B" means A or more and B or less.

### <Carbon black>

One embodiment of the present invention is a carbon black that has a bulk density after being compressed at 490 Pa for 3 minutes (hereinafter also referred to as "post-compression bulk density") of 0.08 g/cm³ or lower. The carbon black having such characteristics is suitably used as a conductive material for a battery (in particular, a lithium ion secondary battery). The battery using this carbon black exhibits various excellent characteristics (particularly discharge rate characteristics). The post-compression bulk density of the carbon black is preferably 0.07 g/cm³ or lower, more preferably 0.06 g/cm³ or lower, and even more preferably 0.05 g/cm³ or lower, from the viewpoint of further enhancing the discharge rate characteristics of the battery. The post-compression bulk density of the carbon black may be, for example, 0.01 g/cm³ or higher, and is preferably 0.015 g/cm³ or higher, more preferably 0.02 g/cm³ or higher, even more preferably 0.03 g/cm³ or higher, and particularly preferably 0.04 g/cm³ or higher, from the viewpoint of further enhancing the discharge rate characteristics of the battery.

The post-compression bulk density of the carbon black is measured by the following procedure. First, the carbon black (for example, 7.0 g) is placed in a cylindrical plastic transparent vessel (for example, a cylindrical PET transparent vessel having an inside diameter of 6.2 cm, a cross section of 30.18 cm², and a height of 25 cm). Subsequently, an air-permeable plastic nonwoven fabric (for example, having a thickness of 3 mm) is cut out in accordance with the cross-sectional shape of the vessel and placed on the carbon black in the vessel. Further, the metal mesh is cut out in accordance with the cross-sectional shape of the vessel, and placed on the nonwoven fabric in the vessel. Next, zirconia beads having a diameter of 3 mm (for example, "YTZ ball" manufactured by Nikkato Corporation) are substantially uniformly placed in each of three plastic small bags (for example, polyethylene small bags ("S-4" manufactured by Seisannipponsha Ltd.)), and the three small bags are placed as weights on the metal mesh in a balanced manner. At this time, the amount of the zirconia beads (total weight of the nonwoven fabric, the metal mesh, the small bag and the zirconia beads) is adjusted in consideration of the cross section of the transparent vessel so that 490 Pa (5 gf/cm²) is applied to the carbon black. The nonwoven fabric and the metal mesh have rigidity withstanding the weight, and function as a piston having air permeability when the carbon black is compressed. After leaving for 3 minutes in a state where the weight is disposed, the height of the carbon black in the vessel is measured while the weight is disposed. The post-compression bulk density is calculated from the measured height, the cross-sectional area of the vessel, and the weight of the carbon black.

The reason why the condition of 490 Pa (5 gf/cm²) for 3 minutes is adopted in the measurement of the post-compression bulk density is as follows. For example, when the carbon black is used for an electrode (mixed material layer) of a battery, it is necessary to disperse the carbon black when preparing a slurry for forming the mixed material layer. In this case, it is considered that the pressures generated on the carbon black dispersed in the dispersion medium by general stirring with an anchor blade or the like are of the same order as 490 Pa. In addition, since it has been confirmed that the value of the bulk density of the carbon black converges at least 3 minutes after the pressure of 490 Pa is applied to the carbon black by the above-described method, it can be said that it is appropriate to set the compression time to 3 minutes in specifying the characteristics of the carbon black. It is also demonstrated in the examples that the bulk density of the carbon black after being compressed under the condition of 490 Pa for 3 minutes actually correlates with the discharge rate characteristics of the battery.

Another embodiment of the present invention is a carbon black that has a bulk density after being stirred under a condition of gravity acceleration 400 G for 30 minutes using a rotation-revolution type stirrer. (hereinafter also referred to as "post-stirring bulk density") of 0.1 g/cm³ or lower. The carbon black having such characteristics is suitably used as a conductive material for a battery (in particular, a lithium ion secondary battery). The battery using this carbon black exhibits various excellent characteristics (particularly discharge rate characteristics). The post-stirring bulk density of the carbon black is preferably 0.09 g/cm³ or lower, more preferably 0.08 g/cm³ or lower, and even more preferably 0.07 g/cm³ or lower, from the viewpoint of further enhancing the discharge rate characteristics of the battery. The post-stirring bulk density of the carbon black may be, for example, 0.04 g/cm³ or higher, and is preferably 0.05 g/cm³ or higher and more preferably 0.06 g/cm³ or higher, from the viewpoint of further enhancing the discharge rate characteristics of the battery.

The post-stirring bulk density of the carbon black is measured by the following procedure. First, the carbon black is placed in a cylindrical resin vessel (for example, a vessel having a volume of 150 cc attached to a rotation-revolution type stirrer ("Awatori Rentaro ARV-310" manufactured by Thinky Corporation)), and the vessel is sealed with a dedicated cover. At this time, in order to appropriately measure the post-stirring bulk density, the weight of the carbon black to be put into the vessel is adjusted so that the weight of the carbon black per one-unit area of the cross section of the vessel falls within the range of 0.15 to 0.18 g/cm². The vessel containing the carbon black is set in a rotation-revolution type stirrer (for example, "Awatori Rentaro ARV-310" manufactured by Thinky Corporation), and stirring is performed under the condition of 2000 rpm (corresponding to gravity acceleration 400 G) for 30 minutes. Subsequently, within 5 minutes after the completion of the stirring, the vessel containing the carbon black is taken out, and the height of the carbon black in the vessel is measured. The post-stirring bulk density is calculated from the measured height, the cross-sectional area of the vessel, and the weight of the carbon black.

In the above-described method for measuring the post-stirring bulk density, the reason why the condition of 30 minutes under the gravity acceleration 400 G is adopted as the stirring condition is as follows. For example, when the carbon black is used for an electrode (mixed material layer) of a battery, it is necessary to disperse the carbon black when preparing a slurry for forming the mixed material layer. In this case, in order to disperse the carbon black, it is common to disperse the carbon black by using a stirrer capable of rotating at a high speed, and in particular, as the number of rotations of a general stirrer, the 2000 rpm is often adopted in the central region. Since the gravity acceleration becomes 400 G as the center when the rotation speed of 2000 rpm is adopted as the center in the stirrer, 400 G is adopted as the gravity acceleration. In addition, since it has been confirmed that the value of the bulk density of the carbon black converges at least 30 minutes after the gravity acceleration 400 G is applied to the carbon black, it can be said that it is appropriate to set the stirring time to 30 minutes in specifying the characteristics of the carbon black. As demonstrated in the examples, the post-stirring bulk density of the carbon black under the gravity acceleration 400 G for 30 minutes correlates with the discharge rate characteristics of the battery.

The reason why the discharge rate characteristics of the battery can be enhanced when the carbon black has the post-compression bulk density of 0.08 g/cm³ or lower or the post-stirring bulk density of 0.1 g/cm³ or lower is presumed as follows. First, in the electrode (mixed material layer) of the battery, in order to impart good electron conductivity to the active material while maintaining good ion electric conductivity (particularly when a small amount of the carbon black is added), it is effective for the carbon black to form a web-like or capillary-like network without aggregating on the surface of the active material. By forming such a network structure, the carbon black can provide good electron conductivity while retaining an electrolytic solution necessary for ion conductivity. On the other hand, since the carbon black having the above post-compression bulk density or post-stirring bulk density easily spreads in a wide volume region without aggregation in a step of dispersing the carbon black when preparing a slurry for forming a mixed material layer and a subsequent drying step (a step of volatilizing a dispersion medium in the slurry), the carbon black, the above-described network structure can be easily formed under wide conditions. Therefore, the carbon black having the above post-compression bulk density or post-stirring bulk density can achieve both ion conduction and electron conduction to the active material at a high level in the positive electrode and the negative electrode, and as a result, can achieve excellent discharge rate characteristics.

Note that Patent Literature 1 describes that a conductive carbon black having a ratio of paraffin oil absorption amounts before and after compression obtained by pressing the carbon black at a high pressure and a BET specific surface area within a certain range has low resistance in a powder and a compound, however, the high-pressure pressing conditions in Patent Literature 1 are based on the conditions of ASTM D2414-01, and include four operation steps by compression under 165 MPa (1650 atm). Since this step corresponds to pressing at a pressure having a dimension different from that of the load generated in the normal dispersion step, it is estimated that this step gives a different mechanical influence on the carbon black from that in the normal dispersion step.

The type of the carbon black is not particularly limited as long as it has the above-described post-compression bulk density or post-stirring bulk density. The carbon black may be an acetylene black, a furnace black, a channel black, a ketjen black, or other carbon blacks. The carbon black is preferably an acetylene black produced from a raw material gas containing acetylene. As the other carbon blacks, a carbon black produced from a raw material containing a carbon source such as benzene, toluene or ethylene is preferably used. In these preferred carbon blacks, since the amount of a hetero atom due to production process is small, the carbon purity is high and the crystallinity tends to be high, and as a result, the electronic conductivity is also high.

The carbon black has a specific surface (BET specific surface) of preferably 75 m²/g or more, more preferably 80 m²/g or more, even more preferably 90 m²/g or more, particularly preferably 100 m²/g or more, more particularly preferably 120 m²/g or more, even more particularly preferably 140 m²/g or more, and even more particularly preferably 180 m²/g or more, from the viewpoint of further increasing the number of contact points with the active material and the current collector in the positive electrode / negative electrode and easily obtaining a better effect of imparting conductivity and retaining the electrolytic solution. The specific surface area of the carbon black is preferably 400 m²/g or less, more preferably 380 m²/g or less, even more preferably 360 m²/g or less, and particularly preferably 340 m²/g or less, from the viewpoint that interaction between the carbon blacks is suppressed, the carbon blacks are more uniformly dispersed among active materials in a positive electrode and a negative electrode, a more favorable conductive path can be formed, and the electrolytic solution can be retained. In the present specification, the specific surface area is a value measured in accordance with JIS K6217-2:2017 "B method: method using constant volume method".

The average primary particle diameter of the carbon black is not particularly limited, but is preferably 18 nm or more, and more preferably 20nm or more, from the viewpoint that interaction between the carbon blacks is suppressed, the carbon blacks are more uniformly dispersed in the negative electrode active material, a more favorable conductive path can be formed, and the electrolytic solution can be retained. The average primary particle diameter of the carbon black is preferably 50 nm or less from the viewpoint that the number of contact points with the active material and the current collector in the positive electrode or the negative electrode is further increased and better effects of imparting conductivity and retaining a liquid are obtained. In the present specification, the average primary particle diameter of the carbon black is a value obtained by averaging particle diameters measured based on a photograph taken by a transmission electron microscope. Specifically, five images of 100,000 magnifications are taken using a transmission electron microscope (for example, JEM-2000FX (manufactured by JEOL Ltd.)), and 200 primary particles randomly extracted are subjected to image analysis to calculate the mean value of the diameters of the particles.

The DBP (dibutyl phthalate) absorption amount of the carbon black is not particularly limited, but is preferably 80 mL/100g or more, more preferably 100 mL/100g or more, even more preferably 120 mL/100g or more, particularly preferably 140 mL/100g or more, and even more particularly preferably 152 mL/100g or more, from the viewpoint that aggregates (structures in which a plurality of the primary particles are fused: primary aggregates) when used as a conductive material have sufficient lengths and spreads, and formation of a good conductive path and retention of an electrolytic solution are possible. The DBP absorption amount of the carbon black is preferably 500 mL/100g or less, more preferably 480 mL/100g or less, even more preferably 460 mL/100g or less, and particularly preferably 440 mL/100g or less, from the viewpoint that aggregation due to excessive entanglement of aggregates is suppressed, the carbon black is more uniformly dispersed among active materials, and further favorable formation of a conductive path and retention of an electrolytic solution are possible. In the present specification, the DBP absorption is a value measured in accordance with JIS K6221 B method: 1982.

The volume resistivity of the carbon black is not particularly limited, but is preferably as low as possible from the viewpoint of conductivity. The volume resistivity of the carbon black measured under 7.5 MPa compression is preferably 0.30 Ω·cm or lower, more preferably 0.25 Ω·cm or lower.

The ash content and moisture content of the carbon black are not particularly limited, but are preferably as low as possible from the viewpoint of suppressing side reactions. The ash content of the carbon black is preferably 0.04% by mass or less. The moisture content of the carbon black is preferably 0.10% by mass or less. The ash content is a value measured in accordance with JIS K6218-2:2005.

Next, a method for producing the above-described carbon black will be described. The carbon black can be produced by, for example, a method using a cylindrical decomposition furnace. In this method, for example, a cylindrical decomposition furnace that includes a thermal decomposition unit that performs a thermal decomposition reaction of a carbon source and an aging unit that reforms a thermal decomposition reaction product.

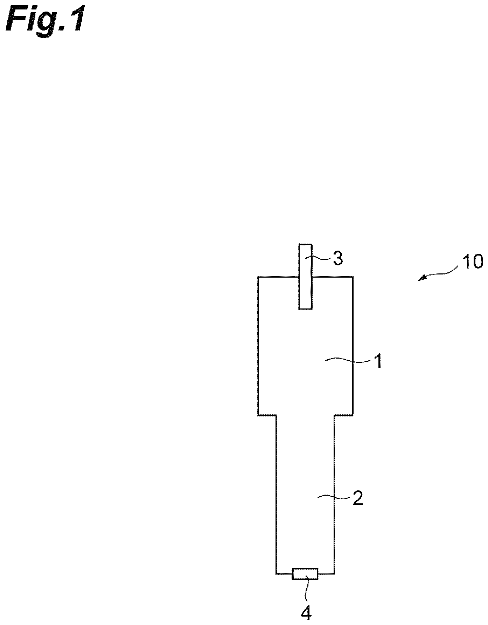

FIG. 1 is a schematic cross-sectional view showing an embodiment of the cylindrical cracking furnace. The cylindrical decomposition furnace 10 shown in FIG. 1 includes a thermal decomposition unit 1 and an aging unit 2. The cylindrical decomposition furnace 10 may further include a nozzle (supply port) 3 that supplies the raw material gas to the thermal decomposition unit 1 and a collection port 4 that collects the produced carbon black from the aging unit 2.

The thermal decomposition unit 1 and the aging unit 2 are each cylindrical and coaxially communicate with each other. The diameter of the thermal decomposition section 1 is preferably larger than that of the aging section 2. From the viewpoint of further homogenizing the carbon black, it is preferable that the ratio of the diameter D₁ of the thermal decomposition unit to the diameter D₂ of the aging unit (D₁/D₂) is 1.2 to 2.2, and the ratio of the length L₁ of the thermal decomposition unit to the length L₂ of the aging unit (L₁/L₂) is 0.4 to 1.0. As a result, the raw material gas supplied to the thermal decomposition unit 1 is retained, and the completion of the thermal decomposition reaction and the formation of the carbon aerosol by the development of the structure in which the primary particles are chemically bonded in the form of beads can be more reliably performed. The ratio (D₁/D₂) is preferably 1.3 to 1.8. The ratio (L₁/L₂) is preferably 0.6 to 0.8.

The raw material gas supplied from the nozzle (supply port) 3 to the thermal decomposition unit 1 preferably contains acetylene as a carbon source. The content of acetylene in the raw material gas is, for example, 10% by volume or more, preferably 30% by volume or more, and more preferably 50% by volume or more. The content of each component in the raw material gas indicates a volume ratio based on the volume at 150°C and 1 atm.

The raw material gas may further contain one or more additional carbon sources as well as acetylene. Examples of the additional carbon sources include saturated hydrocarbons such as methane, ethane, and propane; unsaturated hydrocarbons such as ethylene, propylene, and butadiene; and aromatic hydrocarbons such as benzene, toluene, and xylene. The specific surface area of the carbon black can be increased or decreased by changing the reaction temperature depending on the combination of these carbon sources. The additional carbon source is preferably selected from the group consisting of unsaturated hydrocarbons such as ethylene and propylene, and aromatic hydrocarbons such as benzene and toluene. In addition, a petroleum fraction such as gasoline, kerosene, light oil, or heavy oil may be used as the carbon source as long as the target carbon black can be obtained. In one embodiment, as the raw material gas, a raw material gas which does not contain acetylene and contains the above-described additional carbon source may be used.

When the raw material gas contains acetylene and the additional carbon source, the volume ratio of the additional carbon source to acetylene (volume of the additional carbon source / volume of acetylene) may be, for example, 0.01 or more, preferably 0.2 or more, and more preferably 0.3 or more, and may be, for example, 3.0 or less, preferably 2.5 or less, and more preferably 2.0 or less.

The raw material gas further contains a specific amount of oxygen gas. As a result, the carbon black having the above-described characteristics (in particular, post-compression bulk density and post-stirring bulk density) can be obtained. From the viewpoint of suitably obtaining the carbon black having the above-described characteristics, the content of the oxygen gas in the raw material gas is 21 parts by volume or more, preferably 22 parts by volume or more, more preferably 30 parts by volume or more, even more preferably 50 parts by volume or more, and particularly preferably 100 parts by volume or more, with respect to 100 parts by volume of the carbon source (total of acetylene and the additional carbon sources) in the raw material gas. The content of the oxygen gas in the raw material gas may be, for example, 300 parts by volume or less, preferably 250 parts by volume or less, more preferably 180 parts by volume or less, and even more preferably 160 parts by volume, with respect to 100 parts by volume of the carbon source (total of acetylene and the additional carbon sources) in the raw material gas. The BET specific surface area and DBP absorption amount of the obtained carbon black can also be adjusted by adjusting the volume ratio of the additional carbon source to acetylene described above in addition to the content of oxygen gas in the raw material gas.

The oxygen gas is preferably supplied to the thermal decomposition unit 1 together with the carbon source. When the oxygen gas is supplied, it is more preferable to supply the oxygen gas to the thermal decomposition unit 1 by injecting the oxygen gas from the periphery of the supply port 3 for supplying the carbon source to the thermal decomposition unit 1. In this case, the cylindrical decomposition furnace 10 preferably has an injection port of the oxygen gas in the vicinity of the supply port 3 of the carbon source, and more preferably has a plurality of injection ports provided at equal intervals to surround the supply port 3. The number of the injection ports is preferably 3 or more, and more preferably 3 to 8.

The cylindrical decomposition furnace 10 may include a nozzle having a multiple tube structure (for example, a double tube structure, a triple tube structure, or the like) including the supply port 3 of the carbon source and an injection port that injects the oxygen gas from the periphery thereof. In the case of the double tube structure, for example, the carbon source may be injected from the gap portion on the inner tube side, and the oxygen gas may be injected from the gap portion on the outer tube side. In the case of the triple tube structure including an inner tube, a middle tube, and an outer tube, for example, the oxygen gas may be injected from a gap portion formed by an outer wall of the middle tube and an inner wall of the outer tube, and a carbon source may be injected from the remaining gap portion.

The raw material gas may consist of the carbon source and the oxygen gas, and may further contain a water vapor gas, a hydrogen gas, a carbon dioxide gas, or the like, in addition to the carbon source and the oxygen gas.

In the thermal decomposition unit 1, the supplied raw material gas preferably stays at a temperature of 1700°C or higher. As a result, the completion of the thermal decomposition reaction and the formation of the carbon aerosol by the development of the chain structure can be more reliably performed. The thermal decomposition reaction product produced in the thermal decomposition unit 1 moves from the thermal decomposition unit 1 to the aging unit 2.

In the aging unit 2, the thermal decomposition reaction product supplied from the thermal decomposition unit 1 preferably stays at a temperature of 1500°C or higher. As a result, modification of the carbon aerosol and strengthening of the aggregates are promoted, and the higher quality carbon black can be easily obtained.

The retention rates in the thermal decomposition unit 1 and the aging unit 2 can be appropriately adjusted by adjusting the linear gas velocity of the flowing gas. The retention time in the aging unit 2 is preferably shorter than that in the thermal decomposition unit 1. That is, the linear gas velocity in the aging unit 2 is preferably higher than the linear gas velocity in the thermal decomposition unit 1.

### <Composition>

Another embodiment of the present invention is a composition containing the carbon black of the above-described embodiment and a dispersion medium in which the carbon black is dispersed. The composition is suitably used for forming a battery member (particularly, a positive electrode (mixed material layer) of a battery and a negative electrode (mixed material layer) of a battery), and is more suitably used as a coating liquid (positive electrode slurry and negative electrode slurry) for forming a battery member (particularly, a positive electrode (mixed material layer) of a battery and a negative electrode (mixed material layer) of a battery).

The content of the carbon black is not particularly limited, but is preferably 0.3% by mass or more, more preferably 0.5% by mass or more, and even more preferably 0.6% by mass or more, based on the total amount of the composition, from the viewpoint of facilitating removal of the dispersion medium and reducing energy required for the removal in production of the laminate described later. The content of the carbon black is preferably 30% by mass or less, more preferably 20% by mass or less, even more preferably 15% by mass or less, particularly preferably 10% by mass or less, more particularly preferably 5% by mass or less, even more particularly preferably 3% by mass or less, and further even more particularly preferably 2% by mass or less, based on the total amount of the composition, from the viewpoint of suppressing an increase in viscosity of the composition, facilitating mixing of the composition when the composition contains a binder and an active material described later, and facilitating thickness control when producing the laminate. Even when the content of the carbon black is small, the discharge rate characteristics of the battery can be improved.

The type of the dispersion medium is not limited as long as it can disperse the carbon black. The dispersion medium may be a dispersion medium used in the positive electrode slurry and the negative electrode slurry (coating liquid) from the viewpoint that the dispersion medium can be more suitably used for forming the battery member. When the composition is used for forming a positive electrode (mixed material layer), the dispersion medium may be, for example, N-methyl-2-pyrrolidone, N-ethyl-2-pyrrolidone, or the like. When the composition is used for forming a negative electrode (mixed material layer), the dispersion medium may be, for example, water. The dispersion medium may be a mixed solvent thereof.

The content of the dispersion medium is not particularly limited, but is preferably 20% by mass or more, more preferably 30% by mass or more, based on the total amount of the composition, from the viewpoint of suppressing an increase in viscosity of the composition, facilitating mixing of the composition when the composition contains a binder and an active material described below, and facilitating thickness control when producing the laminate. The content of the dispersion medium is preferably 50% by mass or less, and more preferably 40% by mass or less, based on the total amount of the composition, from the viewpoint of facilitating removal of the dispersion medium and reducing energy required for the removal in the production of the laminate described later.

The composition may further contain a dispersant from the viewpoint of more suitably dispersing the carbon black. The dispersant may be a known dispersant. The dispersant may be a polymer dispersant, and examples thereof include a polyvinyl acetate dispersant, a polyvinyl alcohol dispersant, an acrylic dispersant, a polyether dispersant, a polyester dispersant, a polyamide dispersant, a polyurethane dispersant, a phosphoric acid ester dispersant, a siloxane dispersant, a polyoxyethylene dispersant, an alkyl benzene sulfonic acid dispersant, an olefin dispersant, and a fatty acid ester dispersant. The molecular weight of the polymer dispersant is not particularly limited.

The content of the dispersant is not particularly limited. The mass ratio of the content of the dispersant to the content of the carbon black (content of dispersant (mass) / content of carbon black (mass)) may be, for example, 0.02 or more, 0.05 or more, or 0.08 or more, and may be 0.3 or less, 0.2 or less, or 0.15 or less.

The composition may further contain one or both of a binder and an active material. In this case, the composition is suitably used for forming a battery member (particularly, a positive electrode (mixed material layer) of a battery and a negative electrode (mixed material layer) of a battery), and is more suitably used as a coating liquid for forming a battery member (particularly, a positive electrode (mixed material layer) of a battery and a negative electrode (mixed material layer) of a battery).

Examples of the binder include a polyvinylidene fluoride, a polytetrafluoroethylene, a styrene-butadiene copolymer, a (meth)acrylic acid ester copolymer, a hydrogenated acrylonitrile, and a butadiene rubber. The structure of the copolymer is not particularly limited, and may be any of a random copolymer, an alternating copolymer, a graft copolymer, and a block copolymer. When the composition is used for forming a positive electrode (mixed material layer), the binder is preferably a polyvinylidene fluoride. When the composition is used for forming a negative electrode (mixed material layer), the binder is preferably a styrene-butadiene copolymer.

The content of the binder may be, for example, 0.5% by mass or more, 0.7% by mass or more, or 1% by mass or more, and 15% by mass or less, 10% by mass or less, or 5% by mass or less, based on the total amount of the composition.

The active material is appropriately selected from an active material for a positive electrode and an active material for a negative electrode depending on whether the composition is used to form a positive electrode (mixed material layer) or a negative electrode (mixed material layer).

The active material for a positive electrode is a material capable of reversibly storing and releasing cations (positive electrode active material). The active material for a positive electrode may be, for example, metallic sulfides or metallic oxides containing no lithium such as TiS₂, MoS₂, NbSe₂, and V₂O₅, lithium-containing composite oxides containing Mn, or lithium-containing polyanionic compounds. More specifically, the active material for a positive electrode may be, for example, LiCoO₂, LiNin₂O₄, LiNiO₂, LiMPO₄, Li₂MSiO₄, LiNi_{X}Mn_{(2-X)} O₄, Li(Mn_{X}Ni_{Y}Co_{Z})O₂, Li(Al_{X}Ni_{Y}Co_{Z})O₂, or xLi₂MnO₃-(1-x)LiMO₂. Note that X in LiNi_{X}Mn_{(2-X)}O₄ satisfies a relationship of 0<X<2. X, Y, and Z in Li(Mn_{X}Ni_{Y}Co_{Z})O₂ and Li(Al_{X}Ni_{Y}Co_{Z})O₂ satisfy a relationship of X+Y+Z=1, and satisfy relationships of 0<X<1, 0<Y<1, and 0<Z<1. x in xLi₂MnO₃-(1-x)LiMO₂ satisfies a relationship of 0<x<1. M in LiMPO₄, Li₂MSiO₄ and xLi₂MnO₃-(1-x)LiMO₂ is one or more elements selected from Fe, Co, Ni, and Mn.

The active material for a negative electrode is a material capable of reversibly storing and releasing anions (negative electrode active material). Examples of the negative electrode active material include a graphite such as natural graphite and artificial graphite, a carbon material such as a non-graphitizable carbon, an easily graphitizable carbon, a polyacene, a graphite oxide, a hard carbon, and an amorphous carbon, a silicon compound, a tin compound, a germanium compound, and a lithium titanate. These active materials for a negative electrode may be used alone or in combination of two or more thereof. The active material for a negative electrode is preferably at least one selected from the carbon material and the silicon compound, and more preferably at least one selected from the graphite and the silicon compound.

The content of the active material for a positive electrode may be, for example, 50% by mass or more, 60% by mass or more, or 63% by mass or more, and 99.2% by mass or less, 90% by mass or less, or 80% by mass or less, based on the total amount of the composition.

The composition may further contain additional additives. Examples of the additional additives include a leveling agent, a thickener, a wetting agent, and an antifoaming agent. The content of the additional additives, for example, may be 0.1% by mass or more and may be 5% by mass or less, based on the total amount of the composition.

The above-described composition can be produced by a known method. The composition can be obtained, for example, by mixing the carbon black and the dispersion medium (and, if necessary, other components such as the dispersant) with a ball mill, a sand mill, a biaxial kneader, a rotation-revolution stirrer, a planetary mixer, a trimix, a disper mixer, or the like.

### <Laminate>

Another embodiment of the present invention is a laminate containing a current collector (base material for an electrode) and a mixed material layer provided on the current collector. The laminate can be suitably used as a positive electrode or a negative electrode of a battery by appropriately selecting the type of the current collector and the composition of the mixed material layer.

The material constituting the current collector is not particularly limited as long as it has high electron conductivity and functions as the current collector, and examples thereof include a metal material, a carbon material, and a conductive metal compound. The current collector may be composed of a single layer or a plurality of layers. The metal material is not particularly limited, and examples thereof include gold, silver, copper, platinum, aluminum, iron, nickel, chromium, manganese, lead, tungsten, titanium, and alloys containing these metals. When the laminate is used as a negative electrode, the current collector is preferably copper. When the laminate is used for a positive electrode, the current collector is preferably aluminum from the viewpoint of electron conductivity and cost. The thickness of the current collector is preferably 10 µm or more from the viewpoint of good formability of the battery, and is preferably 30 µm or less from the viewpoint of suppressing a decrease in energy density of the battery.

The mixed material layer contains, for example, the carbon black, the binder, and the active material. The active material in the mixed material layer of the positive electrode is the active material for a positive electrode, and the active material in the mixed material layer of the negative electrode is the active material for a negative electrode. In the mixed material layer, the active material may be bound to the surface of the current collector via the binder to form a porous body. In addition to these components, the mixed material layer may further contain other components such as the above-described dispersant. The thickness of the mixed material layer may be, for example, 10 µm or more and 100 µm or less.

The laminate is produced by, for example, applying the composition of the above-described embodiment onto the current collector, removing the dispersion medium in the composition by heating, and then applying pressure by a roll press or the like to bring the components into close contact.

### <Battery>

Another embodiment of the present invention is a battery including the above laminate as an electrode. The battery may be any of a primary battery, a secondary battery, and a fuel cell. Examples of the primary battery include a manganese battery, an alkaline battery, a nickel battery, a nickel-manganese battery, a silver oxide battery, a mercury battery, an air-zinc battery, a lithium battery, a seawater battery, and a lithium-air battery. Examples of the secondary battery include a lithium ion battery, a lithium air battery, a sodium ion battery, a nickel hydrogen battery, a nickel cadmium battery, a sodium sulfur battery, a nickel zinc battery, a silver oxide zinc battery, a redox flow battery, a cobalt titanium lithium battery, and the like. The battery is preferably a lithium ion secondary battery from the viewpoint of satisfying high required characteristics such as high capacity, high durability, and high output.

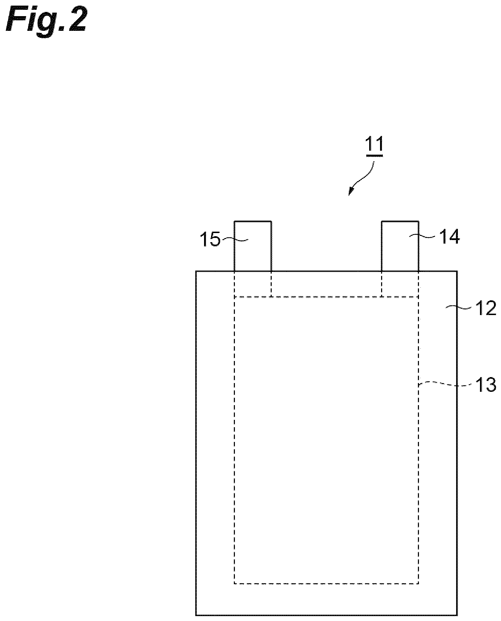

FIG. 2 is a schematic view showing an embodiment of the battery. As shown in FIG. 2, the battery 11 includes a bag-shaped outer package 12 and an electrode group 13 housed inside the outer package 12. The electrode group 13 is provided with a positive electrode tab 14 (made of aluminum, for example) and a negative electrode tab 15 (made of nickel, for example). The positive electrode tab 14 and the negative electrode tab 15 protrude from the outer package 12 to the outside.

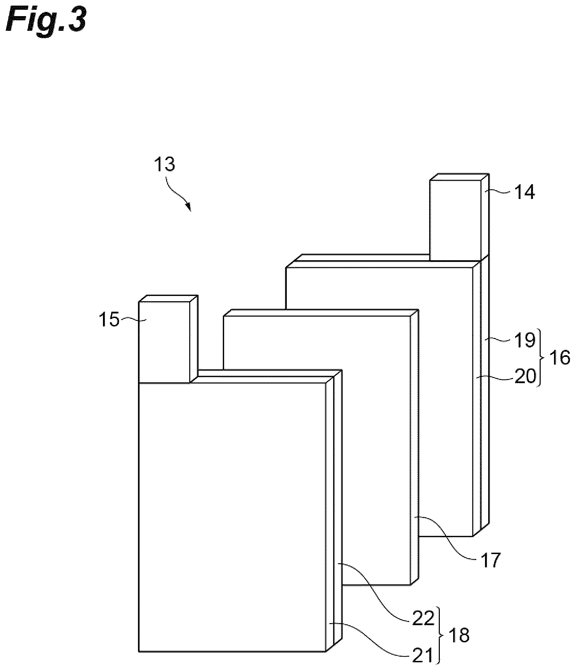

FIG. 3 is an exploded perspective view showing the electrode group 13. As shown in FIG. 3, the electrode group 13 includes a positive electrode 16, an insulating porous film 17 (for example, a polyolefin microporous film), and a negative electrode 18, in this order. The positive electrode 16 includes a positive electrode current collector 19 and a positive electrode mixed material layer 20. The negative electrode 18 includes a negative electrode current collector 21 and a negative electrode mixed material layer 22. The positive electrode tab 14 is welded to the positive electrode current collector 19. The negative electrode tab 15 is welded to the negative electrode current collector 21. The positive electrode 16 and the negative electrode 18 are disposed such that the positive electrode mixed material layer 20 and the negative electrode mixed material layer 22 each face the porous film 17 side.

One or both of the positive electrode 16 and the negative electrode 18 are formed of the laminate including the above-described current collector and mixed material layer. That is, the battery 11 includes the above-described laminate as the electrode (one or both of the positive electrode 16 and the negative electrode 18).

The method for producing the battery is not particularly limited, and may be a conventionally known method for producing a battery. For example, after the positive electrode tab 14 is welded to the positive electrode 16 (positive electrode current collector 19) and the negative electrode tab 15 is welded to the negative electrode 18 (negative electrode current collector 21), the porous film 17 is disposed between the positive electrode 16 and the negative electrode 18 in the outer package 12. Subsequently, the electrolytic solution is injected until the electrolytic solution is sufficiently impregnated into porous portions of the positive electrode 16, the negative electrode 18, and the porous film 17, and then the outer package 12 is sealed, whereby the battery 11 is obtained.

The use of the battery is not particularly limited. The battery can be used in a wide range of fields including portable AV devices such as digital cameras, video cameras, portable audio players, portable televisions, and portable video players; portable information terminals such as notebook computers, smartphones, and mobile PCs; portable game devices; electric tools; electric bicycles; hybrid vehicles; electric vehicles; power storage systems; and drones.

### Examples

Hereinafter, the present invention will be described in more detail based on examples, but the present invention is not limited to the examples.

### <Examples 1 to 10>

Acetylene gas, other carbon source gases, and oxygen gas, which were raw material gases, were supplied at a mixing ratio shown in Tables 1 and 2 at an injection rate of 6.5 m/s from a nozzle installed at the top of the decomposition reactor including the cylindrical thermal decomposition unit and the cylindrical aging unit as shown in FIG. 1. In the thermal decomposition unit, the raw material gases were reacted at a temperature of 1700°C or higher. In the aging unit, the thermal decomposition reaction product produced in the thermal decomposition unit was retained at a temperature of 1500°C or higher. Then, carbon black was produced, and the carbon black was collected by a bag filter directly connected to the lower portion (recovery port) of the furnace. The mixing ratios of the raw material gases in Tables 1 and 2 are shown in terms of % by volume based on the total amount of the raw material gases and parts by volume based on 100 parts by volume of the total of the carbon sources.

### <Comparative Examples 1 to 6>

As the carbon blacks of Comparative Examples 1 to 6, commercially available carbon blacks shown below were used.
Comparative Example 1: furnace black (LITX-200, manufactured by Cabot Corporation)
Comparative Example 2: furnace black (product number: LITX-300, manufactured by Cabot Corporation)
Comparative Example 3: furnace black (LITXHP, manufactured by Cabot Corporation)
Comparative Example 4: furnace black (SuperP Li, manufactured by Imerys Co., Ltd.)
Comparative Example 5: furnace black (SuperC45, manufactured by Imerys Co., Ltd.)
Comparative Example 6: furnace black (SuperC65, manufactured by Imerys Co., Ltd.)

### <Comparative Examples 7 to 9>

Carbon black (acetylene black) was produced in the same manner as in Example 1 except that the type of gas and the mixing ratio were changed as shown in Table 2.

**[Table 1]**

| | | Example | | | | | | |
|---|---|---|---|---|---|---|---|---|
| | | 1 | 2 | 3 | 4 | 5 | 6 | 7 |
| Mixing ratio of raw material gases (% by volume) | Acetylene | 35 | 38 | 28 | 26 | 24 | 18 | 20 |
| | Other carbon source | 12 | 13 | 16 | 22 | 27 | 31 | 31 |
| | Oxygen | 53 | 49 | 56 | 52 | 49 | 51 | 49 |
| Mixing ratio of raw material gases (parts by volume) | Acetylene | 74.5 | 74.5 | 63.6 | 54.2 | 47.1 | 36.7 | 39.2 |
| | Other carbon source | 25.5 | 25.5 | 36.4 | 45.8 | 52.9 | 63.3 | 60.8 |
| | Oxygen | 112.8 | 96.1 | 127.3 | 108.3 | 96.1 | 104.1 | 96.1 |
| Type of other carbon source | | Toluene | Toluene | Toluene | Ethylene | Ethylene | Benzene | Benzene |

**[Table 2]**

| | | Example | | | Comparative Example | | |
|---|---|---|---|---|---|---|---|
| | | 8 | 9 | 10 | 7 | 8 | 9 |
| Mixing ratio of raw material gases (% by volume) | Acetylene | 17 | 78 | 0 | 78 | 76 | 73 |
| | Other carbon source | 27 | 3 | 31 | 14 | 12 | 10 |
| | Oxygen | 56 | 19 | 69 | 8 | 12 | 17 |
| Mixing ratio of raw material gases (parts by volume) | Acetylene | 38.6 | 96.3 | 0.0 | 84.8 | 86.4 | 88.0 |
| | Other carbon source | 61.4 | 3.7 | 100.0 | 15.2 | 13.6 | 12.0 |
| | Oxygen | 127.3 | 23.5 | 222.6 | 8.7 | 13.6 | 20.5 |

Using each of the carbon blacks of Examples and Comparative Examples described above, the following powder characteristics of the carbon black (post-compression bulk density, post-stirring bulk density, BET specific surface area, and DBP (dibutyl phthalate) absorption amount) were measured. In addition, the battery characteristics (discharge rate characteristics (discharge capacity retention rate at the time of 3C discharge)) of lithium ion batteries when each carbon black was used in a positive electrode for lithium ion batteries were evaluated. The results are shown in Tables 3 and 4.

### [Measurement of post-compression bulk density]

7.0 g of each of the carbon blacks of Examples and Comparative Examples was placed in a cylindrical PET transparent vessel having an inside diameter of 6.2 cm, a cross section of 30.18 cm², and a height of 25 cm. Subsequently, an air-permeable plastic nonwoven fabric (having a thickness of 3 mm) was cut out in accordance with the cross-sectional shape of the vessel and placed on the carbon black in the vessel. Further, the metal mesh was cut out in accordance with the cross-sectional shape of the vessel, and placed on the nonwoven fabric in the vessel. Next, zirconia beads having a diameter of 3 mm ("YTZ ball" manufactured by Nikkato Corporation) were substantially uniformly placed in each of three polyethylene small bags ("S-4" manufactured by Seisannipponsha Ltd.)), and the three small bags were placed as weights on the metal mesh in a balanced manner. At this time, the amount of the zirconia beads was adjusted so that the total weight of the nonwoven fabric, the metal mesh, the small bag and the zirconia beads was 150.75 g. Thus, the pressure of 490 Pa (5 gf/cm²) was applied to the carbon black. The nonwoven fabric and the metal mesh had rigidity withstanding the weight, and function as a piston having air permeability when the carbon black was compressed. After leaving for 3 minutes in a state where the weight was disposed, the height of the carbon black in the vessel was measured while the weight is disposed. The post-compression bulk density was calculated from the measured height, the cross-sectional area of the vessel, and the weight of the carbon black (7.0 g).

### [Measurement of post-compression bulk density]

4.00 g of each of the carbon blacks of Examples and Comparative Examples was placed in a cylindrical resin vessel having a volume of 150 cc of a rotation-revolution type stirrer ("Awatori Rentaro ARV-310" manufactured by Thinky Corporation)), and the vessel is sealed with a dedicated cover. The area of the cross section of the vessel was 24.61 cm², and therefore the weight of the carbon black per one-unit area of the cross section of the vessel was 0.163 g/cm². The vessel containing the carbon black was set in a rotation-revolution type stirrer (for example, "Awatori Rentaro ARV-310" manufactured by Thinky Corporation), and stirring was performed under the condition of 2000 rpm (corresponding to gravity acceleration 400 G) for 30 minutes. Subsequently, within 5 minutes after the completion of the stirring, the vessel containing the carbon black was taken out, and the height of the carbon black in the vessel was measured. The post-stirring bulk density was calculated from the measured height, the cross-sectional area of the vessel, and the weight of the carbon black (4.00 g).

### [Measurement of specific surface area]

The specific surface area (BET specific surface areas) of each of the carbon blacks of Examples and Comparative Examples was measured in accordance with JIS K6217-2:2017 "B method: method using constant volume method".

### [Measurement of DBP absorption amount]

For each of the carbon blacks of Examples and Comparative Examples, the DBP absorption was measured according to JIS K6221 B method: 1982.

### [Evaluation of battery characteristics (discharge rate characteristics)]

First, a lithium ion battery for measuring the discharge rate characteristics was produced by the following procedure.

### (Production of positive electrode)

N-methyl-2-pyrrolidone (hereinafter referred to as "NMP", manufactured by Kanto Chemical Co., Inc.) as a dispersion medium, polyvinylidene fluoride (hereinafter referred to as "PVdF", "HSV900" manufactured by Arkema Inc.) as a binder, each of the carbon blacks of Examples and Comparative Examples as a conductive material, polyvinylalcohol ("B05" manufactured by Denka Company Limited) as a dispersing agent, and LiNi_{0.5}Mn_{0.3}Co_{0.2}O₂ (hereinafter referred to as "NMC532", "TX10" manufactured by Umicore Co., Ltd., average particle diameter (D₅₀): 10 µm) as an active material were prepared. They were mixed so that the PVdF was 1.9 parts by mass in terms of solid content, the carbon black was 1 part by mass in terms of solid content, the polyvinyl alcohol was 0.1 parts by mass in terms of solid content (mass of dispersing agent / mass of conductive material = 0.1), and the NMC532 was 97 parts by mass in terms of solid content, and then NMP was further added so that the total content of the solid was 68% by mass. The obtained mixture was mixed until uniform under the stirring condition of 2000 rpm (corresponding to gravity acceleration 400 G) for 5 minutes using a rotation-revolution stirrer ("Awatori Rentaro ARV-310" manufactured by Thinky Corporation) to obtain a positive electrode slurry. The prepared positive electrode slurry was applied to one surface of an aluminum foil (manufactured by UACJ Corporation) having a thickness of 15 µm using an applicator to form a film. Then, the film was left (pre-dried) in a dryer (105°C) for 1 hour to remove NMP. Next, the laminate was pressed with a roll press machine at a linear pressure of 200 kg/cm to adjust the total thickness of the laminate including the aluminum foil to 80 µm. Next, in order to remove residual moisture, vacuum drying was performed at 170°C for 3 hours to obtain a positive electrode including a current collector and a mixed material layer.

### (Production of negative electrode)

Pure water as a dispersion medium, a styrene-butadiene copolymer (hereinafter referred to as "SBR") as a binder, carboxymethylcellulose (hereinafter referred to as "CMC") as a thickening agent, and artificial graphite ("AGP-2A" manufactured by Shenzhen BTR) as an active material were prepared. They were mixed so that the CMC was 1 part by mass in terms of solid content and the artificial graphite was 97 parts by mass in terms of solid content, and then pure water was further added. The obtained mixture was mixed until uniform using a rotation-revolution stirrer ("Awatori Rentaro ARV-310" manufactured by Thinky Corporation). Further, the SBR was added to the mixture to be 2% by mass in terms of solid content, followed by further mixing. Then, a negative electrode slurry having a solid content concentration of 50% was obtained. Subsequently, the negative electrode slurry was applied onto a copper foil (manufactured by UACJ Corporation) having a thickness of 10 µm using an applicator to form a film, and then the film was left (pre-dried) in a dryer (60°C) for 1 hour. Next, the laminate was pressed at a linear pressure of 100 kg/cm by a roll press machine to adjust the total thickness of the laminate including the copper foil to 50 µm. Next, in order to remove residual moisture, vacuum drying was performed at 120°C for 3 hours to obtain a negative electrode including a current collector and a mixed material layer.

### (Production of lithium ion secondary battery)

In a dry room controlled to have a dew point of -50°C or lower, the produced positive electrode was processed to have a size of 40×40mm and the negative electrode was processed to have a size of 44×44mm, and then an aluminum tab was welded to the positive electrode and a nickel tab was welded to the negative electrode. The mixed material layers of the positive electrode and the negative electrode were disposed to face each other at the center, and a polyolefin microporous membrane processed to have a size of 45×45 mm was disposed between the positive electrode and the negative electrode. Next, the sheet-like outer package cut and processed to have a size of 70×140 mm was folded in two at the center of the long side. Next, the laminate of the positive electrode / the polyolefin microporous membrane / the negative electrode was sandwiched between the two-folded outer package while the outer package was disposed so that the aluminum tab for the positive electrode and the nickel tab for the negative electrode were exposed to the outside of the outer package. Next, using a heat sealer, two sides including exposed sides of the positive electrode aluminum tab and the negative electrode nickel tab of the outer package were heated and fused, and then 2 g of electrolytic solution (manufactured by Kishida Chemical Co., Ltd., containing ethylene carbonate / diethyl carbonate = 1/2 (volume ratio) and 1 M of LiPF₆) was injected from one side that was not heated and fused. After the positive electrode, the negative electrode, and the polyolefin microporous film were sufficiently impregnated with the electrolytic solution, the remaining one side of the outer package was heated and fused by a vacuum heat sealer while reducing the pressure inside the battery to obtain a lithium ion secondary battery.

### Subsequently, the produced lithium ion secondary battery was evaluated for discharge rate characteristics by the following method.

The produced lithium ion secondary battery was subjected to constant-current constant-voltage charging with 4.3 V and 0.2 C limits at 25°C, and then discharged to 3.0 V at a constant current of 0.2 C. Next, recovery charging was performed again at the constant current and constant voltage of 4.3 V and 0.2 C limits, discharge was performed to 3.0 V at a discharge current of 0.2 C, and the discharge capacity at this time was measured. Subsequently, charging was performed under the same conditions as in the above-described recovery charging, while the discharge current was changed stepwise from 0.5 C, 1 C, 2 C, and 3 C, recovery charging and discharging were repeated, and the discharge capacity with respect to each discharge current was measured. As an indicator of the discharge rate characteristics of the battery, the discharge capacity retention ratio of discharge at 0.2 C to discharge at 3 C (= discharge capacity of discharge at 3 C / discharge capacity of discharge at 0.2 C × 100 (%)) was calculated.

**[Table 3]**

| | | Example | | | | | | | | | |
|---|---|---|---|---|---|---|---|---|---|---|---|
| | | 1 | 2 | 3 | 4 | 5 | 6 | 7 | 8 | 9 | 10 |
| Powder characteristics of carbon black | Post-compression bulk density (m²/g) | 0.058 | 0.075 | 0.047 | 0.043 | 0.035 | 0.032 | 0.037 | 0.049 | 0.066 | 0.023 |
| | Post-stirring bulk density (m²/g) | 0.074 | 0.095 | 0.061 | 0.063 | 0.052 | 0.091 | 0.071 | 0.062 | 0.086 | 0.068 |
| | BET specific surface area (m²/g) | 190 | 177 | 230 | 216 | 153 | 126 | 81 | 191 | 133 | 144 |
| | DBP absorption amount (mL/100g) | 140 | 150 | 158 | 153 | 152 | 175 | 80 | 173 | 171 | 174 |
| Battery characteristics | Discharge rate characteristics (%) | 59.5 | 56.2 | 79.8 | 77.8 | 65.9 | 71.3 | 55.7 | 73.5 | 66.8 | 75.6 |

**[Table 4]**

| | | Comparative Example | | | | | | | | |
|---|---|---|---|---|---|---|---|---|---|---|
| | | 1 | 2 | 3 | 4 | 5 | 6 | 7 | 8 | 9 |
| Powder characteristics of carbon black | Post-compression bulk density (m²/g) | 0.105 | 0.087 | 0.089 | 0.093 | 0.093 | 0.090 | 0.13 | 0.17 | 0.12 |
| | Post-stirring bulk density (m²/g) | 0.17 | 0.12 | 0.19 | 0.14 | 0.15 | 0.14 | 0.16 | 0.21 | 0.15 |
| | BET specific surface area (m²/g) | 109 | 117 | 87 | 62 | 43 | 63 | 32 | 35 | 47 |
| | DBP absorption amount (mL/100g) | 146 | 141 | 158 | 175 | 194 | 182 | 88 | 56 | 82 |
| Battery characteristics | Discharge rate characteristics (%) | 45.7 | 47.8 | 49.8 | 45.2 | 42.8 | 46.1 | 15.0 | 10.0 | 18.0 |

The lithium ion secondary batteries of Examples 1 to 10 using the carbon black having the post-compression bulk density of 0.08 g/cm³ or lower exhibited higher discharge rate characteristics than those of Comparative Examples 1 to 9 using the carbon black having the post-compression bulk density of higher than 0.08 g/cm³. The lithium ion secondary batteries of Examples 1 to 10 using the carbon black having the post-stirring bulk density of 0.1 g/cm³ or lower exhibited higher discharge rate characteristics than those of Comparative Examples 1 to 9 using the carbon black having the post-stirring bulk density of higher than 0.1 g/cm³.

### Reference Signs List

1: thermal decomposition unit, 2: aging unit, 3: nozzle (supply port), 4: collection port, 10: cylindrical decomposition furnace, 11: battery, 12: outer package, 13: electrode group, 14: positive electrode tab, 15: negative electrode tab, 16: positive electrode, 17: porous film, 18: negative electrode, 19: positive electrode collector, 20: positive electrode mixed material layer, 21: negative electrode collector, 22: negative electrode mixed material layer.

## Claims

1. A carbon black having a bulk density of 0.08 g/cm³ or lower after being compressed at 490 Pa for 3 minutes.

2. A carbon black having a bulk density of 0.1 g/cm³ or lower after being stirred under a condition of gravity acceleration 400 G for 30 minutes using a rotation-revolution type stirrer.

3. The carbon black according to claim 1 or 2, having a specific surface area of 75 m²/g or more and 400 m²/g or less.

4. A composition comprising the carbon black according to claim 1 or 2, and a dispersion medium.

5. The composition according to claim 4, further comprising a binder and an active material.

6. The composition according to claim 4, being used for forming a battery member.

7. A laminate comprising:
a current collector; and
a mixed material layer provided on the current collector and comprising the carbon black according to claim 1 or 2.

8. A battery comprising the laminate according to claim 7 as an electrode.
